# EUROPEAN PATENT SPECIFICATION

(11) **EP 2 900 770 B1**
(45) Date of publication and mention of the grant of the patent: **01.03.2017**
(21) Application number: 13756091.8
(22) Date of filing: 27.08.2013
(51) Int. Cl.: C09D 5/03, B21C 23/32, B21J 3/00, C10M 111/00, C10M 103/00

(54) **USE OF AN ELECTROSTATIC COATING COMPOSITION IN POWDER FORM AS PROTECTIVE COATING AGAINST OXIDATION AND/OR AS LUBRICANT IN THE FORGING OF METAL SUBSTRATES**
DIE VERWENDUNG EINER ELEKTROSTATICHEN PULVERBESCIHCHTUNGSZUSAMMENSETZUNG ALS SCHUTZSCHICHT GEGEN OXIDATION UND/ODER ALS SCHMIERMITTEL IM SCHMEIDEN DER METALLISCHEN SUBSTRATE
L'UTILISATION D'UNE COMPOSITION DE REVÊTEMENT ÉLECTROSTATIQUE PULVERISÉE COMME REVÊTEMENT PROTECTEUR CONTRE L'OXYDATION ET/OU LUBRIFIANT DANS LE FORGEAGE DES SUPPORTS MÉTALLIQUES

(30) Priority: 29.08.2012 EP 12182206
(43) Date of publication of application: 05.08.2015
(73) Proprietor: Prince Belgium BVBA, 8000 Brugge (BE)
(72) Inventor: MULLER, Marc, B-8000 Brugge (BE); GUASP, Vincent, B-8000 Brugge (BE)
(74) Representative: dompatent von Kreisler Selting Werner - Partnerschaft von Patent- und Rechtsanwälten mbB
(86) International application number: PCT/EP2013/067668
(87) International publication number: WO 2014/033098

(56) References cited:
- EP-A1- 0 403 306
- EP-A1- 1 624 084
- GB-A- 2 257 712

## Description

The present invention relates to the use of a coating composition in powder form for metal substrates to be forged and the application thereof.

It is commonly known in the field of hot conventional forging to achieve lubrication by the application of a die lubricant on the tooling surface. The most effective die lubes contain graphite dispersed in water, while synthetic lubricants function well on shallow, less-complex parts. Both types of products should be applied on the dies using spray systems that atomize the diluted material in order to provide the optimum cooling and lubricating properties.

However, there are other areas involving hot forging processes that can benefit from the use of coatings that are applied to the billet/preform prior to heating and then forging. For instance, glass is widely used for hot forging and extrusion of titanium, nickel-based alloys, stainless steels and other super alloys. The coatings are typically comprised of lead-free glass frits dispersed in water and use a resin to help the glass coatings adhere to the billet during the handling and heating cycles. Appropriate glasses in the form of powder are commonly available. The glass coatings function by liquefying and reaching a certain viscosity range during heating. The molten glass provides lubricity, oxidation protection and heat retention.

Another example is to use graphite pre-coat for warm and hot forging of carbon alloyed steels in a temperature range of 1200 to 1850 °F (approx. 650 °C to approx. 1010 °C). Sometimes the graphite-based coating incorporates an anti-oxidation agent to help the coating function at elevated temperatures. This helps to prevent scaling and provides some additional lubrication during forging. Boron nitride is being used for isothermal forging of titanium and nickel-based metals. These precoats tend to use water as the carrier and proper care must be taken to assure the coatings are properly applied and provide the most benefits to the forger.

During the whole production process of sheet steels, the high temperature enhances strong oxidation of the surface and a scale is formed on the strip material. A lot of expensive elements/product is lost and the oxidation layer on the surface must be removed by pickling with strong acids.

It is known that glasses involve a lot of advantages when using during the production process of steels.

For example glass enamels are used as lubricants in the extrusion process of seamless metal pipes at high temperature. The glass layer protects the metal surface from direct contact with oxygen. Such glass enamel is an entirely inorganic material related to the glass family. It mainly is based on quartz, boron oxide, aluminium oxide, (earth) alkaline oxides and fluorine, which are cross linked into a three-dimensional network. According to the requested application, a variety of glass enamel, differing widely in chemical composition, is used in practice. FR 1.152.757 discloses Alumina-alkali metal phosphate glasses. GB 896,360 describes hot extrusion of metals, US 3,390,079 hot extrusion of metallic articles, JP 50054610 A glass lubricants for metal hot extrusion, JP 5058110 A glass lubricant for steel hot extrusion, JP 55001123 hot extrusion of austenitic stainless steel, JP 11092169 A glass lubricants for hot extrusion of steels, JP 07223018 A and JP 07223019 A glass lubrication agents for hot-extrusion working of metals.

JP 51070216 A discloses pre-treating steel plate prior to enamelling - by forming phosphate film and anti-corrosive lubricating layer on surface.

DATABASE WPI, Week 200341, Thomson Scientific, London, GB, AN 2003-442068, XP002690090 and WO 03/045864 A1 discloses a glass allowing to join a metal and a ceramic. Thus, the main function is to ensure a long lasting sealing of two materials. The sealing glass disclosed is a zinc-borate-glass, not a borosilicate glass. However, the ability of zinc to form alloys with the substrate is well known in the art. Thus, the artisan will not take into account such glass composition when forging a metal substrate.

CN 201 381 509 Y discloses a steel pile coated with an epoxy powder coating comprising 40 to 60 wt.% of phenol novolac modified epoxy resin, 0,2 to 3 wt.% of fumed silica, 0 to 5 wt.% of modified PTFE wax, 5 to 25 wt.% of glass powder and 5 to 30wt.% of talc powder plus silica micropowder plus mica powder. No hint is given in that said coating composition my be used for as a protective coating against oxidation and/or as lubricant at high temperature in the forging of metal substrates.

EP 0 403 306 A1 relates to carrier-free forge lubricant and method of using same. The composition is a carrier-free pulverulent forging lubricant having at least one component having adhesive properties at forging temperatures and the method is a method of forging a workpiece in a die which includes the step of spraying onto at least one of the die and the workpiece said coating of an effective amount of a carrier-free pulverulent lubricant composition at ambient pressure. The use of the composition and method is said to significantly reduce smoke generation in hot forging operations by eliminating the use of oils or volatile organic compounds as carriers. Said document discloses exemplary compositions comprising 34 wt.% of polyethylene wax (example 1); 34 wt.% of amide wax (example 2); 40 wt.% of alumina - silica glass (example 8). Said composition is unsuitable to be used as a protective coating against oxidation and/or as lubricant at high temperature in the forging of metal substrates.

Future research efforts are being carried out to develop coatings that can prevent oxidation, while providing lubrication when hot forging alloyed and high temperature steels in excess of 1900 °F (1066 °C). Current technology, whether it be glass, graphite or other pigments have not proven effective for these types of hot forged steels or other metal substrates.

As with die lubricants, application of the coatings is critical to achieve optimum results and benefits. As most coatings of the prior art are water-based, proper heating and application techniques are vital to their success.

In the forging industry glass based coatings are used to lubricate, insulate and protect metal substrates throughout the high temperature process of forging. These coatings of the prior art until now are applied by wet spraying and beside water or other transport media often contain hazardous components with the drawback to escape and being exposed to workers and environment.

The state of art furthermore discloses about lubricating technology by coating solutions containing at least one component with thermo-plastic properties used to adapt friction coefficient for the threaded member of a component of a tubular threaded seal (WO 2008/139058 A2). However, this publication does not relate to Glass formulations optimized for coating in forging industry.

The prior art furthermore encompasses FR 2 691 705 A1 relating to glass technology applied for forging industry.

EP 0 403 306 A1 discloses a carrier-free pulverulent forging lubricant composition having at least one component having adhesive properties at forging temperatures, wherein said component having adhesive properties at forging temperatures is selected from natural and synthetic waxes, polymer resins having high heat resistance, gilsonite and glasses.

GB 2 257 712 A discloses the use of an organic compound such as wax and an inorganic compound including boron compounds, metal oxide, silicon nitride, boron nitride.

In standard forging process, glass coating is applied on preheated billet at typically 210 °F (approx. 100 °C). The application is in general done by spray, by brushing or dipping but in any case coating can be very variable in thickness and therefore in its homogeneity. In addition to that, in the case of spray application, overspray will generate wastes.

The problem of the present invention thus is to optimize coating parameters and to provide an appropriate technology of application for new coating compositions.

The above mentioned problem is solved in a first embodiment of the invention by the features of claim 1.

The expression forging in the sense of the present invention is understood to include all general thermoforming processes of metal substrates.

The core of the invention is to be seen in a glass being able to ensure during the forging step at high temperature protecting a metal substrate against the metal oxidation, providing the needed lubrication and the thermal insulating properties or both. Once the forging step finished the glass is eliminated; its function is temporary.

The glass in question is an "alkaline, earth-alkaline, borosilicate glass" specifically adapted for high temperature application.

Although it is a fact that many coatings of the prior art are presenting a " wax " component, such wax used according to the present invention should have thermo-fusible properties. It is much less probable that the " waxes " are at the same time used for their thermo-fusible properties and in addition to usual encapsulation oils (poly-siloxanes) necessary to better insulate electrically the glass particles (powder) and so allow their transfer without back-ionization and without applied thickness limitation on the workpiece to be forged.

In a preferred embodiment of the invention the composition may be applied to metal substrates such as Iron, steel, Titanium, Nickel including super alloys, Tungsten, Molybdenum, Niobium and Aluminium including their alloys. According to the classical definition "steel" is defined as an iron-carbon-alloy containing less than 2.06 % by weight of carbon (DIN EN 10020).

The coating compositions used for example in the forming of seamless extruded pipes are first of all lubricants at high temperatures (1000 to 1200°C) and high pressures (300 to 1200 MPa). The deformation currently observed is varying between 200 and 3500%. The possibility to play with a wide range of glass compositions allows the extrusion of refractory metals or alloys of at processing temperatures of 1400°C or more, and Titanium or Zirconium base alloys at low temperature from 600 to 750°C

It is the achievement of the invention to provide glass powder and wax containing compositions aiming at the surface protection of metal substrates, in particular sheet steel during the thermo-mechanical process against oxidation by forming a glass layer on sheet steel.

The components of the glass powder may vary in a very broad range. However, the best results have been achieved with a composition containing in % by weight: Al₂O₃ 5 to 15%, B₂O₃ 15 to 25%, SiO₂ 40 to 60%, CaO 5 to 10%, K₂O 1 to 3%, Na₂O 2 to 4%, Li₂O 0 to 3%, ZrO₂ 3 to 7% and MgO 2 to 4%.The list of components is not limited, further oxidic components well known in the art of glass or enamel technology may be used.

The glass powder used according to the present invention is prepared using conventional glass melting techniques. A conventional ceramic refractory may be used to melt the glass. Typically, the raw materials are mixed and melted at about 1150°C to 1550° C during 20-120 minutes. The molten glass formed in the crucible is then cooled quickly to form beads with an inhomogeneous structure. Powder is made there from by means of breaking or milling with or without additives.

The amount of the glass powder as part of the powder composition according to the present invention may be varied broadly depending on the need of the customer and the specific kind of metal substrate to be treated. The composition according to the present invention containing 60 to 95 % by weight, in particular 80 to 90 % by weight of said glass powder. In case the amount of the glass powder is too low, the prevention of oxidation and/or, sufficient lubrication when hot forging at high temperature will not be beneficial. The residue of glass after forging will be removed. Thus, the coating composition including the glass is not to be considered as a permanent element of the forged part but as temporally coating solution or agent providing improvement for quality only during forging process.

No generally accepted definition for the term wax exists. However, an appropriate overview may be found in Ullmann's Encyclopedia of Industrial Chemistry, Volume A 28, pages 103 ff, in particular, page 105 chapter 1.2. Definition, this chapter fully is included by reference herewith. Accordingly, wax as defined according to the present invention must have:
1) A drop point (mp) > 40 °C,
2) Their melt viscosity must not exceed 10 000 mPa . s at 10 °C above the drop point,
3) They should be polishable under slight pressure and have a strongly temperature-dependent consistency and solubility,
4) At 20 °C they must be kneadable or hard to brittle, coarse to finely crystalline, transparent to opaque, but not glassy, or highly viscous or liquid,
5) Above 40 °C they should melt without decomposition,
6) Above the mp the viscosity should exhibit a strongly negative temperature dependence and the liquid should not tend to stringiness,
7) Waxes should normally melt between ca. 50 and 90 °C (in exceptional cases up to 200 °C),
8) Waxes generally burn with a sooting flame after ignition,
9) Waxes can form pastes or gels and are poor conductors of heat and electricity (i. e., they are thermal and electrical insulators).

Conclusively, waxes according to the present invention may be selected from one or more members of natural and/ or synthetic waxes.

Natural waxes according to the definition above are selected from the group of fossil waxes and/or nonfossil waxes. Going further in detail, the fossil waxes are selected from the group of petroleum waxes on one hand and on the other hand lignite, peat and/or montan waxes, in particular Ocerite, macrocrystalline paraffin waxes and/or microcrystalline waxes. The latter group may be furthermore classified in chemically modified waxes, in particular acid (oxidized) waxes, esterified waxes and/or (partially) neutralized acid waxes.

On the other hand, said nonfossil waxes are selected from the group of animal waxes and/or vegetable waxes.

Beside and/or instead of natural waxes, the composition according to the present invention may contain synthetic waxes in particular selected from the group of partially synthetic waxes, in particular fatty acid amide waxes and/or fully synthetic waxes, in particular polyolefin waxes including polyethylene and/or polypropylene, Fischer-Tropsch-waxes and/or polar synthetic waxes including oxidates and copolymers.

Said wax will play a role in the limitation of back-emission also called back-ionisation, and therefore allowing an increased thickness of layer applied to make sure that the glass coating will lubricate, insulate or both all along the forging process.

Different waxes were tested successfully. Mostly preferred are those having a high wettability while those having a low wettability did not provide satisfactory results for what concerns adherence on the substrate.

The best ratio glass powder to wax is of some importance for achieving good results. According to the present invention the compositions contain 5 to 20 % by weight, in particular 10 to 15 % by weight of said wax relative to the total coating composition. It was found that best results were obtained within said range.

In order to improve the powder fluidity, the composition according to the present invention comprises amorphous silicon dioxide.

In this respect, a small amount of synthetic amorphous silicon dioxide is used. In particular the coating composition contains 1 to 3 % by weight, in particular 1 to 2 % by weight of said silicon dioxide or another inert oxide providing fluidity.

Another target was to mix all components in a very homogenous way by mixing all the raw materials together while keeping away any risk of dust explosion getting this way a final product easy to apply on any type of substrates. The selected method is a ball mill system charged with little number of balls in order to avoid any friction during mixing. This way, for example after 3 hours of rolling and mixing, the coating composition according to the present invention product is ready to be packaged for use.

The combination of a specific wax, its concentration formulated in an optimized composition suitable for curing step suitable and all forging operations.

Electrostatic powder coating is one of the most environmentally friendly and economical technology in surface treatment. Since the early 60's, powder-coating paints have been available on the market and their problem-free production and processing made powder coating a well-established and commonly recognized technique. In fact, powder coatings are
- environmentally friendly
- energy-saving
- safe to handle and process
- highly economical.

Electrostatic powder coating is based on the fact that particles with opposite charges attract each other. This is why most of the conductive and thermally stable solids are suitable for powder coating. Today, electrostatic powder coating considerably increases its presence in the domain of multiple metallic objects.

Dry coating powder is filled in a hopper, fluidized or stirred and subsequently transported by means of compressed air via injectors to the powder gun. In this gun, high voltage is created from a low voltage of 10V utilizing the cascade principle. During the spraying process, one or more electrodes charge the powder with 60 - 100 kV.

An electrical field is generated between the gun and the grounded workpiece. The powder particles follow the field lines and, due to the residual charge, remain bonded to the object. Once coated, the workpieces are either manually or automatically transferred to a curing oven. Plastic powders usually are cured at a temperature in the range between 140 °C and 200 °C, fusing into a smooth coating with layer thicknesses of 30-80 µm for decorative and 200-500 µm for functional purposes.

Enamel powders may be applied in a layer thickness range of 80-200µm, requiring sensitively higher curing temperatures such as varying for example from 780 °C to 830 °C due to their specific chemical properties.

Before coating the workpieces, all impurities such as grease, oil, dirt etc. should be cleaned off. This cleaning process takes place in a multizone pretreatment system. According to the material, the subsequent step may include pickling, phosphating and chromatized. In general, steel sheets are phosphated, galvanized steel sheets slightly pickled for improved adhesion and aluminum sheets chromatized. By means of the conveyor system, the workpieces are guided through the different treatment sections where chemicals are slightly acid alkaline phosphates, alkaline bases or acids are used. In a spraying tunnel, which is equipped with a nozzle system, the workpieces are sprayed from all angles. As coating results substantially may depend on perfect cleaning and a precisely adapted pretreatment, the quantity nozzles, spraying angle and pump power have to be adapted to the respective workpieces. Also metal cleaning systems, which are manufactured in modular units, have to be custom-designed solutions accurately adapted to the specific case. Overdimensioning means waste of energy and raw materials. As a matter of principle, measures of efficient environmental care and raw material recycling are to be taken into account in all pretreatment concepts. Dimensions and layout of the cleaning zones may be individually designed according to the workpieces and specific needs of the customer. In the conception of pretreatment systems, economical consumption of water, raw materials and particularly thermal energy should be top priority.

After passing all pretreatment zones if necessary by means of the conveyor system, residual humidity is eliminated in the dry-off oven. The latter is comparable to a curing oven but designed in a simpler way, reaching temperatures up to 150 °C. Depending on the type of workpiece, blowing off with normal room air by means of nozzles may be sufficient.

Basic prerequisite for the successful application of glass powder coatings in one embodiment are flawlessly pretreated steel workpieces. In order to meet the required quality standards for this specific application, pretreatment lines including up to 20 steps may be necessary. However, this maximum is only required if steel is extremely dirty or rusty. In general, only good quality stainless steel suited for enameling is processed.

Various systems are used to charge the powder. The choice of the process depends on the application and the desires of the user. Generally, three different charging processes are distinguished: electrostatic charging, charging with low ionization and tribo charging. Virtually all manufacturers attain the reduction of air-ionization by the use of a special centerpiece on the top of the gun.

The corona discharging is the unrestrained escape of free electrons from an electrical conductor. The electrostatic gun is equipped at its top with an electrode that expels electrons. When exiting the powder gun, the powder particles are charged through the deposition of air ions. The resulting ionized powder particles, similar to the free ionized air particles, are attracted to all earthed objects. In practice, the earthed object is the workpiece, thus the powder remains bonded to it. The charging principle with constant feed of electrostatic charge allows the use of this gun type in all application cases and for virtually all powder categories available on the market.

In the process of frictional charging, also called tribo charging, powder particles are charged by means of friction for example with other plastic materials. This process can take place in a pipe, tube or over a plate. Ideally, it should take place at high air velocity, as the resulting turbulences in the pipe will increase the number of contacts.

In a powder coating system according to the present invention, the powder has to be forwarded from one place to another, taking into consideration the specific characteristics and safety rules. The most common application is the transportation of the powder from the original container or the powder container directly to the gun. In automatic systems, the powder may be transported from the fresh powder container into an intermediate container (e.g. in a powder center) and from there on to the gun. The overspray powder is collected in the booth, recovered and fed back to the intermediate container. The properties of the powder should not be altered by the transportation. Consequently, the powder transportation should be such as to preserve the original powder properties.

The powder composition used according to the present invention will provide uniform coating and in the same time ensures material saving since all powder overspray can be recycled.

A coating composition according to the present invention containing glass powder and wax is suitable to be handled after the preheating phase and ensures good transfer of the parts to the furnace before forging with all necessary functionalities suitable for good forging on different substrates/alloys: high lubricity, good insulating properties and protective barrier in the furnace atmosphere.

Although it is also well known in the art that a metal piece electrostatically coated remains sensitive to any mechanical shock due to its limited adherence on its substrate, the glass layer sprayed according to the present invention with no other pretreatment of the metal remains fragile and doesn't stick on its substrate throughout time of manipulating and storing the metal parts.

The above defined composition according to the present invention may be used as a protective coating against oxidation and/or as lubricant at high temperature in the forging or other thermoforming processes of metal substrates. In particular preferred is the application of an electrostatic powder containing said composition to said hot metal substrate prior to forging or other thermo mechanical process.

Powder compositions according to the present invention have been developed to be applicable by electrostatic means to be pre-heated at very low temperature improving the performance of its adherence on the substrate before forging. In standard forging of iron or steel, the parts initially pre-coated with glass coatings are heated in an integrated line at a temperature in the range typically from 500 °F (approx. 940°C) to 560 °F (approx. 1040°C) depending on substrate grade, being handled with no specific care and therefore exposed to important mechanical shocks.

The principles of the present invention are: First step was to develop glass frits suitable for customer's process conditions then mixing compatible waxes with these frits.

In the frame of this specific development, glass coating are applied dry by electrostatic means but in this process may include an additional pre-heating step of the powder composition at around 65 °F (approx. 150°C) for 15 min; these conditions are flexible and can be adjusted case by case at customers leading to parts coated with a hard and adherent layer after cooling down and before forging process.

The so coated part could be then easily handled and stored before any further production steps. This way any customer can create its own stock to get more flexibility in its production flow and in the same time ensure high precision coating with no wastes.

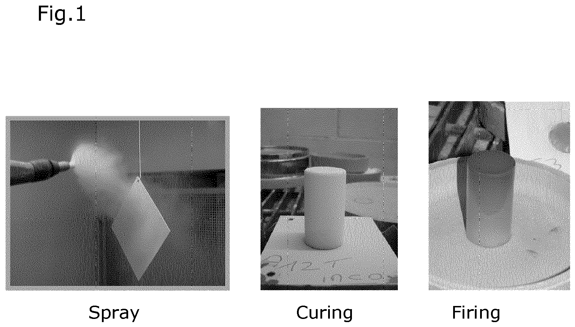

Fig. 1 indicates the use of a preferred typical chemical glass composition in % by weight: Al₂O₃=10% B₂O₃=20% SiO₂=50% CaO=7% K₂O=2% Na₂O=3% ZrO₂=5% MgO=3%. The electrostatic powder contained wax in an additional amount of 12 parts per weight in relation to 100 parts per weight of the total electrostatic powder.

The coating was applied with a specific weight of the deposit [mg/cm²] 1 to 10 e.g. 1.5g maxi for a piece of 40 cm² of surface.

The speed of applying the electrostatic powder was varied depending from the layer thickness. A metal plate having the size of 18cmx12cm has been coated in 17 sec to a thickness of 50 µm. After that the coating is air dried showing a smooth appearance, but fragile to touch. The temperature explicitly to apply for hardening the coating was approximately 150°C (variable as a function of the custom process). After that the coating is dry of smooth appearance and hard so resistant to mechanical stress.

The temperature applied to the glass coating afterwards ranged between 850°C to 1200°C.

The coating after that was glassy (vitrified) and protected the metal piece against oxidation.

The coating thickness was around 20µm for a pure lubricant and 150µm for a thermal insulation coating.

## Claims

1. Use of an electrostatic coating composition in powder form as a protective coating against oxidation and/or as lubricant in the forging of metal substrates , in the range of 1000 to 1200 °C in the forming of seamless pipes and high pressures between 300 and 1200 MPa, in the extrusion of refractory metals or alloys at processing temperatures of 1400 °C or more and for titanium or zirconium alloys at a temperature of 600 to 750 °C, containing
60 to 95 % by weight of a glass powder,
5 to 20 % by weight of a wax and
1 to 3 % by weight of amorphous silicon dioxide.

2. Use according to claim 1, **characterized in that** the metal substrate is selected from iron, steel, titanium, nickel including super alloys, Tungsten, Molybdenum, Niobium and Aluminium including their alloys.

3. Use according to claims 1 or 2, **characterized in that** the substrate to be forged is a fan, blade, ring or tube, in particular for aircraft industry, military application and/or energy

4. Use according to anyone of claims 1 to 3, **characterized in that** said glass powder contains in % by weight: Al₂O₃ 5 to 15%, B₂O₃ 15 to 25%, SiO₂ 40 to 60%, CaO 5 to 10%, K₂O 1 to 3%, Na₂O 2 to 4%, Li₂O 0 to 3%, ZrO₂ 3 to 7% and MgO 2 to 4%.

5. Use according to anyone of claims 1 to 4, **characterized in that** the composition contains 80 to 90 % by weight of said glass powder.

6. Use according to anyone of claims 1 to 5, **characterized in** said wax is selected from one or more members of natural and/ or synthetic waxes.

7. Use according to claim 6, **characterized in that** the natural waxes are selected from the group of fossil waxes and/or non fossil waxes.

8. Use according to claim 7, **characterized in that** the fossil waxes are selected from the group of petroleum waxes, lignite, peat and/or montan waxes, in particular ocerite, macrocrystalline paraffin waxes and/or microcrystalline waxes.

9. Use according to claim 8, **characterized in that** the lignite, peat and/or montan waxes are selected from the group of: chemically modified waxes, in particular acid (oxidized) waxes, esterified waxes and/or (partially) neutralized acid waxes.

10. Use according to claim 7, **characterized in that** the non fossil waxes are selected from the group of animal waxes and/or vegetable waxes.

11. Use according to claim 6, **characterized in that** the synthetic waxes are selected from the group of partially synthetic waxes, in particular fatty acid amide waxes and/or fully synthetic waxes, in particular polyolefin waxes including polyethylene and/or polypropylene, Fischer-Tropsch-waxes and/or polar synthetic waxes including oxidates and copolymers.

12. Use according to anyone of claims 1 to 11, **characterized in that** the composition contains 10 to 15 % by weight of said wax.

13. Use according to claim 1, **characterized in that** the composition contains 1 to 2 % by weight of said silicon dioxide.

14. Use according to anyone of claims 1 to 13 by applying an electrostatic powder containing said composition to said hot metal substrate prior to forging or other thermo mechanical process.

## Patentansprüche

1. Verwendung einer elektrostatischen Beschichtungszusammensetzung in Pulverform als Schutzbeschichtung gegen Oxidation und/oder als Gleitmittel beim Schmieden von Metallsubstraten im Bereich von 1000 bis 1200 °C bei der Bildung nahtloser Rohre und bei hohen Drücken zwischen 300 und 1200 MPa, bei der Extrusion von feuerfesten Metallen oder Legierungen bei Verarbeitungstemperaturen von 1400 °C oder mehr und für Titan- oder Zirconiumlegierungen bei einer Temperatur von 600 bis 750 °C, enthaltend
60 bis 95 Gew.-% eines Glaspulvers;
5 bis 20 Gew.-% eines Wachses; und
1 bis 3 Gew.-% amorphes Siliciumdioxid.

2. Verwendung gemäß Anspruch 1, **dadurch gekennzeichnet, dass** das Metallsubstrat aus Eisen, Stahl, Titan, Nickel einschließlich Superlegierungen, Wolfram, Molybdän, Niob und Aluminium einschließlich ihrer Legierungen ausgewählt ist.

3. Verwendung gemäß Anspruch 1 oder 2, **dadurch gekennzeichnet, dass** das zu schmiedende Substrat ein Ventilator, Blatt, Ring oder Rohr ist, insbesondere für die Luftfahrtindustrie, militärische Anwendung und/oder im Energiesektor.

4. Verwendung gemäß einem der Ansprüche 1 bis 3, **dadurch gekennzeichnet, dass** das Glaspulver in Gew.-% 5 bis 15% Al₂O₃, 15 bis 25% B₂O₃, 40 bis 60% SiO₂, 5 bis 10% CaO, 1 bis 3% K₂O, 2 bis 4% Na₂O, 0 bis 3% Li₂O, 3 bis 7% ZrO₂ und 2 bis 4% MgO enthält.

5. Verwendung gemäß einem der Ansprüche 1 bis 4, **dadurch gekennzeichnet, dass** die Zusammensetzung 80 bis 90 Gew.-% des Glaspulvers enthält.

6. Verwendung gemäß einem der Ansprüche 1 bis 5, **dadurch gekennzeichnet, dass** das Wachs aus einem oder mehreren Vertretern von natürlichen und/oder synthetischen Wachsen ausgewählt ist.

7. Verwendung gemäß Anspruch 6, **dadurch gekennzeichnet, dass** die natürlichen Wachse aus der Gruppe der fossilen Wachse und/oder nichtfossilen Wachse ausgewählt sind.

8. Verwendung gemäß Anspruch 7, **dadurch gekennzeichnet, dass** die fossilen Wachse aus der Gruppe der Erdölwachse, Braunkohle-, Torf- und/oder Montanwachse, insbesondere Ozokerit, makrokristallinen Paraffinwachse und/oder mikrokristallinen Wachse ausgewählt sind.

9. Verwendung gemäß Anspruch 8, **dadurch gekennzeichnet, dass** die Braunkohle-, Torf- und/oder Montanwachse aus der Gruppe der chemisch modifizierten Wachse, insbesondere sauren (oxidierten) Wachse, veresterten Wachse und/oder (partiell) neutralisierten sauren Wachse ausgewählt sind.

10. Verwendung gemäß Anspruch 7, **dadurch gekennzeichnet, dass** die nichtfossilen Wachse aus der Gruppe der Tierwachse und/oder Pflanzenwachse ausgewählt sind.

11. Verwendung gemäß Anspruch 6, **dadurch gekennzeichnet, dass** die synthetischen Wachse aus der Gruppe der partiell synthetischen Wachse, insbesondere Fettsäureamidwachse, und/oder vollsynthetischen Wachse, insbesondere Polyolefinwachse einschließlich Polyethylen und/oder Polypropylene, Fischer-Tropsch-Wachse und/oder polaren synthetischen Wachse einschließlich Oxidaten und Copolymeren ausgewählt sind.

12. Verwendung gemäß einem der Ansprüche 1 bis 11, **dadurch gekennzeichnet, dass** die Zusammensetzung 10 bis 15 Gew.-% des Wachses enthält.

13. Verwendung gemäß Anspruch 1, **dadurch gekennzeichnet, dass** die Zusammensetzung 1 bis 2 Gew.-% des Siliciumdioxids enthält.

14. Verwendung gemäß einem der Ansprüche 1 bis 13 durch Auftragen eines elektrostatischen Pulvers, das die Zusammensetzung enthält, auf das heiße Metallsubstrat vor dem Schmieden oder dem anderen thermomechanischen Verfahren.

## Revendications

1. Utilisation d'une composition de revêtement électrostatique sous forme de poudre en tant que revêtement protecteur contre l'oxydation et/ou en tant que lubrifiant dans le forgeage de substrats métalliques dans la gamme allant de 1000 à 1200 °C dans la formation de tubes sans soudure et hautes pressions entre 300 et 1200 MPa, dans l'extrusion de métaux ou alliages réfractaires à des températures de traitement de 1400 °C ou plus et pour les alliages de titane ou zircone à une température de 600 à 750 °C, contenant de 60 à 95% en poids d'une poudre de verre,
de 5 à 20% en poids d'une cire, et
de 1 à 3% en poids de dioxyde de silicium amorphe.

2. Utilisation selon la revendication 1, **caractérisée en ce que** le substrat métallique est choisi parmi le fer, l'acier, le titane, le nickel incluant des superalliages, le tungstène, le molybdène, le niobium et l'aluminium incluant leurs alliages.

3. Utilisation selon la revendication 1 ou 2, **caractérisée en ce que** le substrat à forger est un ventilateur, une pale, un anneau ou un tube, notamment pour l'industrie aéronautique, pour l'application militaire et/ou pour l'énergie.

4. Utilisation selon l'une quelconque des revendications 1 à 3, **caractérisée en ce que** la poudre de verre contient, en % en poids : 5 à 15 % Al₂O₃, 15 à 25 % B₂O₃, 40 à 60 % SiO₂, 5 à 10 % CaO, 1 à 3 % K₂O, 2 à 4 % Na₂O, 0 à 3 % Li₂O, 3 à 7 % ZrO₂ et 2 à 4 % MgO.

5. Utilisation selon l'une quelconque des revendications 1 à 4, **caractérisée en ce que** la composition contient de 80 à 90 % en poids de ladite poudre de verre.

6. Utilisation selon l'une quelconque des revendications 1 à 5, **caractérisée en ce que** ladite cire est choisie parmi un ou plusieurs membres de cires naturelles et/ou synthétiques.

7. Utilisation selon la revendication 6, **caractérisée en ce que** les cires naturelles sont choisies dans le groupe des cires fossiles et/ou des cires non fossiles.

8. Utilisation selon la revendication 7, **caractérisée en ce que** les cires fossiles sont choisies dans le groupe des cires de pétrole, des cires de lignite, de tourbe et/ou minérales, notamment l'ozocérite, des cires de paraffine macrocristallines et/ou des cires microcristallines.

9. Utilisation selon la revendication 8, **caractérisée en ce que** les cires de lignite, de tourbe et/ou minérales sont choisies dans le groupe des cires chimiquement modifiées, notamment des cires acides (oxydées), des cires estérifiées et/ou des cires acides (partiellement) neutralisées.

10. Utilisation selon la revendication 7, **caractérisée en ce que** les cires non fossiles sont choisies dans le groupe des cires d'origine animale et/ou des cires d'origine végétale.

11. Utilisation selon la revendication 6, **caractérisée en ce que** les cires synthétiques sont choisies dans le groupe des cires partiellement synthétiques, notamment des cires d'amide d'acide gras, et/ou des cires complètement synthétiques, notamment des cires de polyoléfine incluant du polyéthylène et/ou du polypropylène, des cires de Fischer-Tropsch et/ou des cires synthétiques polaires incluant les oxidates et les copolymères.

12. Utilisation selon l'une quelconque des revendications 1 à 11, **caractérisée en ce que** la composition contient de 10 à 15 % en poids de ladite cire.

13. Utilisation selon la revendication 1, **caractérisée en ce que** la composition contient de 1 à 2 % en poids dudit dioxyde de silicium.

14. Utilisation selon l'une quelconque des revendications 1 à 13 par application d'une poudre électromagnétique contenant ladite composition audit substrat métallique chaud avant le forgeage ou les autres procédés thermomécaniques.
